**Europäisches Patentamt**

(19) **European Patent Office**

**Office européen des brevets**

(11) Publication number: **0 079 158 B2**

(12) # NEW EUROPEAN PATENT SPECIFICATION

(45) Date of publication of the new patent specification : **10.04.91 Bulletin 91/15**

(51) Int. Cl.⁵ : **A47J 27/09**

(21) Application number : **82305644.5**

(22) Date of filing : **22.10.82**

(54) Pressure cooker relief valve assembly.

(30) Priority : **04.11.81 GB 8133327**

(43) Date of publication of application :
**18.05.83 Bulletin 83/20**

(45) Publication of the grant of the patent :
**11.09.85 Bulletin 85/37**

(45) Mention of the opposition decision :
**10.04.91 Bulletin 91/15**

(84) Designated Contracting States :
**AT BE CH DE FR IT LI LU NL SE**

(56) References cited :
**BE-A- 503 798**
**CH-A- 230 049**
**DE-A- 1 779 501**
**DE-A- 2 917 201**

(56) References cited :
**FR-A- 1 183 836**
**FR-A- 1 188 831**
**GB-A- 312 563**
**JP-U-50 147 927**
**US-A- 2 590 620**
**US-A- 2 633 867**
**US-A- 2 633 870**
**US-A- 2 692 613**

(73) Proprietor : **THE PRESTIGE GROUP PLC.**
**Prestige House 23-26 High Street**
**Egham Surrey TW20 9DU (GB)**

(72) Inventor : **Robinson, Geoffrey**
**11, Howorth Close Moseley Road**
**Burnley Lancashire (GB)**

(74) Representative : **Freeman, Brian David et al**
**c/o Stevens, Hewlett & Perkins 5 Quality Court**
**Chancery Lane**
**London WC2A 1HZ (GB)**

EP 0 079 158 B2

**Description**

This invention relates to a pressure cooker relief valve assembly and to a pressure cooker incorporating such an assembly.

Pressure cookers of the domestic type generally have an escape port, usually in the removable cover of the cooker, and the pressure within the cooker is regulated by a relief valve controlling the port. Relief valves are well known and a common type comprises a valve member and a valve seating, one of which acts against the other under pressure of a predetermined weight. When it is desired to vent the cooker, for example, when cooking is finished, the valve has to be opened. This can cause a rapid escape of steam and hence the operator has to take care to avoid being scalded. Belgian Patent Specification 503798 discloses a weight valve for a pressure vessel which is surrounded by a skirt and collar which form part of the mass of the valve. Steam issuing from the valve port can impinge directly upon the inner surface of the skirt and escape to the atmosphere through a series of holes around the upper circumference of the skirt. This has the disadvantage that the path taken by the steam issuing from the valve port is not controllable either within the chamber (formed by the skirt surrounding the valve port) or upon its exit from the chamber.

According to the invention there is provided a pressure cooker relief valve assembly according to claim 1.

The directional opening in the chamber enables escaping gases (e.g. steam) to be directed away from the user and escaping steam may also entrain air which can help to provide cooler conditions for the user in the vicinity of the valve. The skirt portion forms part of the mass of the predetermined weight and thus the valve member including the chamber can form a compact design which may be easily removed as a unit in order to gain access to the valve seating, e.g. for cleaning purposes.

The inner wall of the chamber controls the pathway of the steam discharging from the valve into the chamber and also determines, in part, the dimensions and shape of the chamber. Both the pathway and the characteristics of the chamber are important in enabling the noise level of the discharging steam to be reduced. The noise level may also be reduced by suitable choise of the dimensions and shape of the opening in the skirt.

The inner wall preferably has an opening therethrough such that gas from the valve port can pass into the chamber through the opening in the inner wall and from the chamber to the atmosphere through the opening in the skirt portion.

Preferably the valve member includes a hand grip portion to enable the valve to be manually manipulated (e.g. to open the valve) and the opening in the skirt is arranged to direct escaping gases away from the hand grip portion.

With many existing types of pressure cookers it is necessary to manually lift the weight off the valve seating when it is desired to open the valve. This operation requires the weight to be firmly grasped and this can be a disadvantage if escaping steam is issuing from the valve. Alternative methods of venting the cooker include lifting the weight by means of, for example, a pivoted lever or a sliding wedge. These mechanical methods for lifting the weight are complicated and hence expensive to produce.

Accordingly the pressure cooker relief valve assembly may include means for relieving the pressure of the weight by axially rotating the weight and a cam surface relative to each other, the rotation causing the weight to be tilted relative to the valve seating. The valve assembly can be opened by simple rotation of the weight relative to the cam surface. Either the weight or the cam surface or both can be rotated. Preferably the cooker is vented by manual rotation of the weight in which case the weight need only be handled momentarily to turn it through a small angle. In an alternative embodiment the rotation may be achieved by, for example, a clockwork timer acting through a linking mechanism. The tilt of the weight caused by the rotation, whether manual or mechanical, can aid in directing the escaping steam in a predetermined direction, e.g. away from the user, especially if the underside of the weight is in close proximity to another surface. The direction of the escaping steam is further controlled by the opening in the surrounding chamber as explained above, through which any gas (e.g. steam) entering the chamber through the valve port can escape.

The invention also provides a pressure cooker incorporating a relief valve assembly as set forth above.

Embodiments of the invention will now be described with reference to the accompanying drawings in which

Figure 1 is a cross-sectional side elevation of one embodiment of pressure relief valve assembly mounted on a lid of a pressure cooker

Figure 2 is a plan view from above of the pressure relief valve assembly of Figure 1

Figure 3 is a side elevation, as viewed from the right of Figure 1, of the weight valve of the valve assembly

Figure 4 is a side elevation, as viewed from the right of Figure 1, of the weight cover of the valve assembly

Figure 5 is a perspective view of the valve seat collar of the valve assembly of Figure 1

Figure 6 is a perspective view of a modified form of valve seat collar

Figure 7 is a plan view from above of a modified pressure relief valve in the closed position

Figure 8 is a plan view from above of the pressure relief valve of Figure 7 in the open position

Figure 9 is a cross-sectional side elevation of the modified pressure relief valve as viewed in the direction IX-IX of Figure 7

Figure 10 is a cross-sectional side elevation of the modified pressure relief valve as viewed in the direction X-X of Figure 8

Figure 11 is an isometric view of the valve seat collar of the modified pressure relief valve.

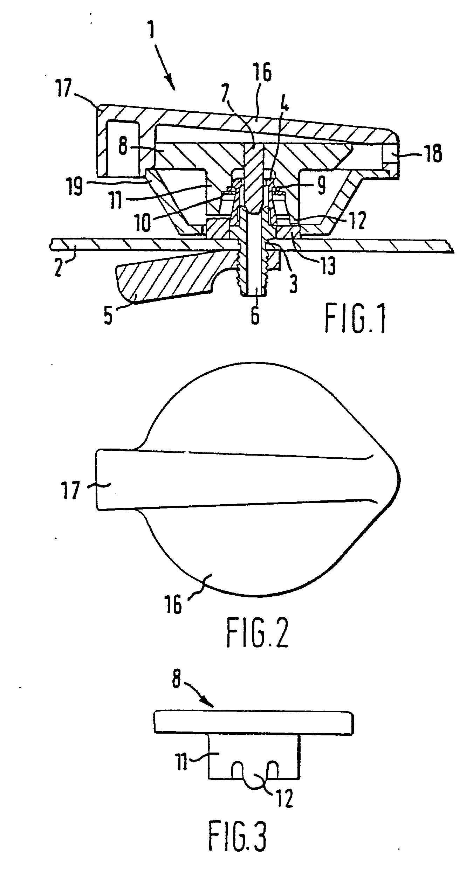

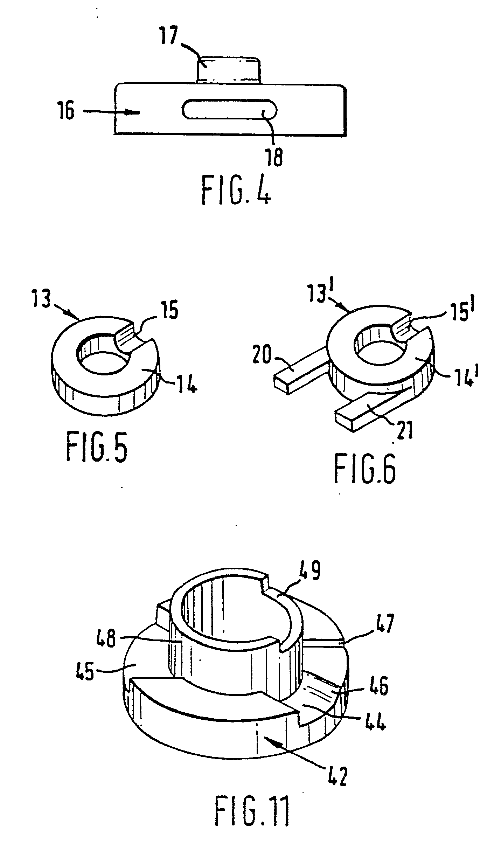

As shown in the Figures 1 to 6 of the drawings, the first embodiment of a pressure relief valve assembly is indicated generally by reference numeral 1 and is mounted on the lid 2 of a pressure cooker. The assembly includes a valve of known type including a valve seating 3, incorporating a valve support 4, held in position by a wing nut 5 within the lid 2. A port 6 extends through the seating 3 and this can be closed by a valve pin 7. A weight 8 is attached to the upper end of the pin 7.

The weight 8 is retained by the valve support 4 by means of a snap ring 9 and locking ring 10 such that the pin 7 can rotate in the seating 3 and be tilted and lifted by the mechanism described hereinafter or the weight 8 with its attachments can be removed from the seating 3 for cleaning purposes.

The weight 8 has an inner depending skirt section 11 including an elongated prong member 12 (as specifically shown in Figure 3).

Mounted on the lid 2 below the weight 8 is a valve seat collar 13, the structure of which is shown specifically in Figure 5. The upper face of the collar comprises a cam surface consisting of a flat surface 14 and a recess 15.

Attached to the weight 8, and covering its upper surface, is a cover 16. The cover 16 includes a hand grip portion 17 and an opening 18 (shown most clearly in Figure 4) in a side wall opposite to the hand grip portion. Extending from the cover 16 are side walls 19 forming an outer skirt which together with the cover 16 forms a chamber surrounding the valve.

In the position shown in Figure 1 the valve is in the closed or sealed position. The prong member 12 of the weight 8 is within the recess 15 of the collar 13 and the pin 7 is firmly seated on the valve seating 6.

When it is desired to open the valve the cover 16 is rotated through a small angle thus rotating the weight 8. The prong member 12 is thus cammed out of the recess 15 on to the top face 14 of the collar 13. This causes the weight 8 to be tilted and raised, lifting the pin 7 off the seat 3. The valve is thus opened. Any steam within the pressure cooker is released into the chamber formed by the cover 16 and side walls 19 and out through the opening 18, in a direction away from the hand grip 17. The dimensions and shape of the chamber and the opening are chosen so as to minimise the noise level of the escaping steam.

The modified valve seat collar 13' shown in Figure 6 is similar to that shown in Figure 5 in having a recess portion 15' and a flat surface 14' forming a cam surface for the prong member 12. The collar 13', however, has two horizontal extensions 20 and 21. A downward extension of the weight 8 can fall between extensions 20 and 21, so that the extensions act as stop members only allowing rotation of the weight through a small angle.

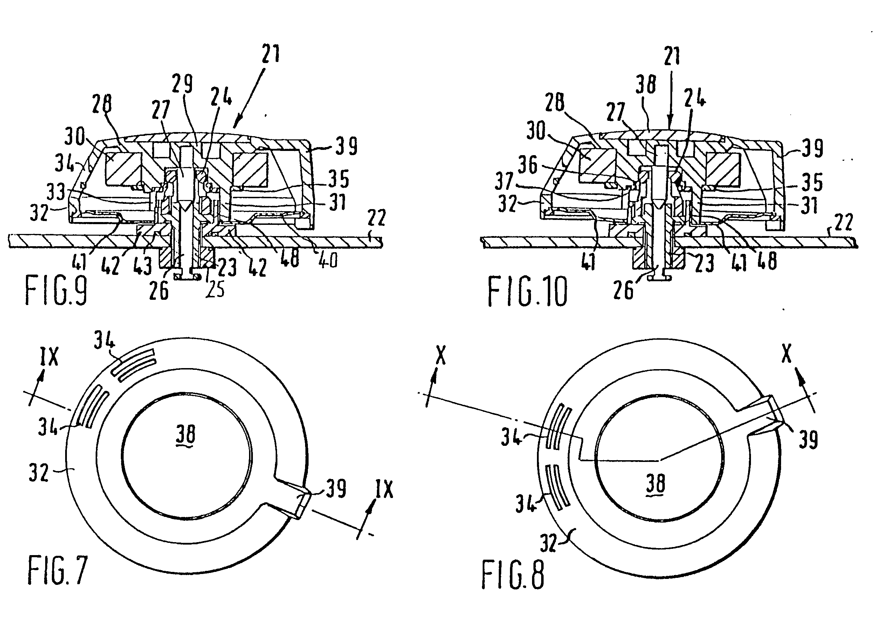

The modified pressure relief valve assembly will now be described with reference to Figures 7 to 11. The modified assembly is indicated generally by reference numeral 21 and is mounted on the lid 22 of a pressure cooker. The assembly includes a valve of known type including a valve seating 23, incorporating a valve support 24, held in position by a nut 25 within the lid 22. A port 26 extends through the seating 23 and this can be closed by a valve pin 27. A weight indicated generally by reference numeral 28 is attached to the upper end of the pin 27. The weight 28 comprises a plastic moulding 29 and an annular metal weight ring 30. The moulding 29 has an inner depending skirt portion 31 and an outer depending skirt portion 32. The inner skirt portion 31 has a slot 33 in one face. The outer skirt portion 32 has slits 34 in a corresponding face.

The weight ring 30 is retained on the moulding 29 by means of a washer 35.

The valve assembly 21 is detachably mounted on the valve support 24 by means of a snap ring 36, held in position by means of a washer 37, such that the pin 27 can rotate in the seating 23 and be tilted and lifted by the mechanism described hereinafter or the assembly 21 can be removed from the seating 23 for cleaning purposes.

A cover 38 hides the upper surface of the moulding 29 and a handle 39 is provided to enable the valve assembly to be held and rotated.

A metal plate 40 extends substantially perpendicular to the outer skirt portion 32 and forms a bottom wall of the chamber. The metal plate 40 is provided with two cam lobes 41 which cooperate with the cam surface of the valve seat collar 42, described hereinbelow.

The valve seat collar 42 is mounted on the lid 22 below the weight 28. An O-ring 43 is retained between the collar 42 and the lid 22. The collar 42 has two recesses 44, 45 to receive the lobes 41. The recess 44 has a camming surface comprising a ramp 46. A stop 47 is provided by the vertical end wall of the recess 44. The collar 42 has an upstanding skirt portion 48, which in use, is situated within the inner skirt 31 of the weight 28. A cut-away portion 49 is provided in one face of the skirt portion 48.

In the position shown in Figures 7 and 9 the valve is in the closed or sealed position. The lobes 41 are situated within the recesses 44 and 45 of the collar 42 and the pin 27 is firmly seated on the valve seating 23.

When it is desired to open the valve the assembly 21 is rotated through a small angle by means of the handle 39. The lobe 41 within the recess 44 is cammed up the ramp 46 until further rotation is prevented by stop 47. The camming action causes the weight to be tilted and raised, as shown in Figures 8 and 10, lifting the pin 27 off the seat 23. The valve is thus opened. Any steam within the pressure cooker is released through the port 26, through holes in the valve support 24, out through the cut-away portion 49 in the skirt 48, through the slot 33 in the inner skirt portion 31 into the chamber between the inner and outer skirt portions 31, 32. The steam escapes from the chamber, in a direction away from the handle 39, via the slits 34 in the outer skirt portion 32, the slits being designed to deflect the steam in a partial upwards direction so as to control its forward projection. The dimensions and shape of the chamber and the various openings are chosen so as to minimise the noise level of the escaping steam.

## Claims

1. A pressure cooker relief valve assembly comprising a valve member and a valve seating (3, 23) one of which acts against the other under the pressure of a predetermined weight (8) to close a valve port (6, 26), the assembly including a skirt portion (19, 32) surrounding the valve post to form a chamber, said skirt portion (19, 32) forming post of the mass of the predetermined weight,
characterized in that the chamber lies an inner wall (11, 31) within the skirt portion and surrounding the valve port (6, 26), the inner wall (11, 31) being radially spaced from the valve seating (3, 23) so that the inner wall controls the pathway of the gas discharging from the valve post into the chamber, the skirt portion (19, 32) has an opening (18, 34), and the assembly is sich that gas from the valve port can enter the chamber between the skirt portion (19, 32) and the inner wall and can subsequently escape from the chamber to the atmosphere in substantially a single predetermined direction.

2. A pressure relief valve assembly as claimed in Claim 1 characterised in that the inner wall (11, 32) forms part of the mass of the predetermined weight.

3. A pressure cooker relief valve assembly as claimed in Claim 1 or 2 which includes a hand grip portion (17, 39) to enable the valve to be manually manipulated and the opening in the skirt is arranged to direct escaping gases away from the hand grip portion.

4. A pressure relief valve assembly as claimed in any one of Claims 1 to 3 characterised in that the inner wall (31) has an opening (33) therethrough such that gas from the valve port (26) can pass into the chamber through the opening (33).

5. A pressure relief valve assembly as claimed in Claim 4 characterised in that the opening (33) in the inner wall (31) faces in substantially the same direction as the opening (34) in the skirt portion (32).

6. A pressure cooker relief valve assembly as claimed in any one of Claims 1 to 5 which includes means for relieving the pressure of the weight by axially rotating the weight and a cam surface (14, 15, 46) relative to each other, the rotation causing the weight to be tilted relative to the valve seating.

7. A pressure cooker incorporating a pressure cooker relief valve assembly as claimed in any one of the preceding claims.

## Ansprüche

1. Überdruckventileinheit für einen Dampfkochtopf, die aus einem Ventilkörper und einem Ventilsitz (3, 23) besteht, deren einer unter dem Druck eines vorausberechneten Gewichtes zum Schließen eines Ventilkanales (6, 26) gegen den anderen wirkt, und die einen den Ventilkanal zur Bildung einer Kammer umgebenden Mantelteil (19, 32) aufweist, welcher einen Teil der Masse des vorausberechneten Gewichtes darstellt, dadurch gekennzeichnet, daß die Kammer innerhalb des Mantelteiles eine den Ventilkanal (6, 26) umgebende Innenwand (11, 31) aufweist, die radial von dem Ventilsitz (3, 23) so versetzt ist, daß die Innenwand den Durchfluß des von dem Ventilkanal in die Kammer abgegebenen Gases steuert, und daß die Ventileinheit so ausgebildet ist, daß Gas aus dem Ventilkanal in die Kammer zwischen dem Mantelteil (19, 32) und der Innenwand eintreten und anschließend aus der Kammer in die Atmosphäre in im wesentlichen einer einzigen, vorbestimmten Richtung entweichen kann.

2. Überdruckventileinheit nach Anspruch 1, dadurch gekennzeichnet, daß die Innenwand (11, 32) einen Teil der Masse des vorausberechneten Gewichtes bildet.

3. Überdruckventileinheit nach Anspruch 1 oder 2, die zur manuellen Betätigung des Ventiles einen Handgriffteil 817, 39) enthält und deren Öffnung in dem Mantel so angeordnet ist, daß die entweichenden Gase von dem Handgriffteil weg abgeleitet werden.

4. Überdruckventileinheit nach einem der Ansprüche 1-3, dadurch gekennzeichnet, daß die Innenwand (31) eine durchgehende Öffnung (33) besitzt, durch die Gas aus dem Ventilkanal (26) in die Kammer strömen kann

5. Überdruckventileinheit nach Anspruch 4, dadurch gekennzeichnet, daß die Öffnung (33) in der Innenwand (31) im wesentlichen in der gleichen Richtung wie die Öffnung (34) im Mantelteil (32) angeordnet ist.

6. Überdruckventileinheit nach einem der Ansprüche 1-5, die Mittel zur Verringerung des von dem Gewicht eingestellten Druckes enthält, indem das Gewicht und eine Nockenfläche (14, 15, 46) gegeneinander axial gedreht werden, wobei die Drehung bewirkt, daß das Gewicht relativ zum Ventilsitz gekippt wird.

7. Dampfkochtopf mit einer Überdruckventileinheit für einen Dampfkochtopf nach einem der vorausgehenden Ansprüche.

## Revendications

1. Un ensemble détendeur de pression pour autocuiseur comprenant un élément de soupape et un siège de soupape (3, 23), l'un d'eux agissant contre l'autre sous la pression d'un poids prédéterminé (8) pour fermer un orifice de soupape (6, 26), l'ensemble comprenant une partie de jupe (19, 32) entourant l'orifice de soupape pour constituer une chambre, ladite partie de jupe (19, 32) faisant partie de la masse d'un poids prédéterminé,
caractérisé en ce que
la chambre a une paroi intérieure (11, 31) dans la partie de jupe et entourant l'orifice de soupape (6, 26), la paroi intérieure (11, 31) étant radialement espacée du siège de soupape (3, 23) de telle sorte que la paroi intérieure contrôle le trajet des gaz à la sortie de l'orifice de soupape vers la chambre, la partie de jupe (19, 32) a une ouverture (18, 34), et l'ensemble est tel que les gaz de l'orifice de soupape puissent entrer dans la chambre entre la partie de jupe (19, 32) et la paroi intérieure et puissent subséquemment s'échapper de la chambre vers l'atmosphère sensiblement dans une seule direction prédéterminée.

2. Un ensemble détendeur de pression tel que revendiqué à la revendication 1, caractérisé en ce que la paroi intérieure (11, 32) fait partie de la masse du poids prédéterminé.

3. Un ensemble détendeur de pression pour autocuiseur tel que revendiqué à la revendication 1 ou la revendication 2 qui comprend une partie poignée (17, 39) pour permettre au détendeur d'être manié manuellement, et l'ouverture dans la jupe est conçue pour diriger les gaz évacués dans un sens s'éloignant de la partie poignée.

4. Un ensemble détendeur de pression tel que revendiqué dans l'une ou l'autre des revendications 1 à 3, caractérisé en ce que la paroi intérieure (31) est dotée d'un orifice (33) passant par elle de telle sorte que les gaz de l'orifice de soupape (26) peuvent passer dans la chambre par l'orifice (33).

5. Un ensemble détendeur de pression tel que revendiqué à la revendication 4, caractérisé en ce que l'orifice (33) dans la partie intérieure (31) est tourné essentiellement dans le même sens que l'orifice (34) dans la partie jupe (32).

6. Un ensemble détendeur de pression pour autocuiseur tel que revendiqué dans l'une ou l'autre des revendications 1 à 5 qui comprend des moyens de détente de pression exercée par le poids en faisant tourner le poids axialement et une surface de came (14, 15, 46) l'un par rapport à l'autre, le mouvement de rotation faisant que le poids bascule par rapport au siège de soupape.

7. Un autocuiseur incorporant un ensemble détendeur de pression pour autocuiseur tel que revendiqué dans l'une ou l'autre des revendications précédentes.

FIG.1

FIG.2

FIG.3

FIG.4

FIG.5

FIG.6

FIG.11

FIG.10

FIG.8

FIG.9

FIG.7